# EUROPEAN PATENT APPLICATION

(11) **EP 4 414 905 A1**
(43) Date of publication of application: **14.08.2024**
(21) Application number: 22885926.0
(22) Date of filing: 25.10.2022
(51) Int. Cl.: G06N 20/20

(54) **FEDERATED LEARNING METHOD AND RELATED APPARATUS**

(30) Priority: 28.10.2021 CN 202111267081
(71) Applicant: Huawei Technologies Co., Ltd., Shenzhen, Guangdong 518129 (CN)
(72) Inventor: WAN, Shuo, Shenzhen, Guangdong 518129 (CN); LU, Jiaxun, Shenzhen, Guangdong 518129 (CN); PENG, Chenghui, Shenzhen, Guangdong 518129 (CN); LIU, Zhe, Shenzhen, Guangdong 518129 (CN)
(74) Representative: Gill Jennings & Every LLP
(86) International application number: PCT/CN2022/127307
(87) International publication number: WO 2023/072049

(57) **Abstract**

This application discloses a federated learning method and a related apparatus. The federated learning method includes: A first network device obtains local training data of at least two terminal devices; processes the local training data of the at least two terminal devices, to obtain training datasets; performs model training based on the training datasets, to obtain a model gradient; and sends the model gradient to a second network device. In this way, training data of the first network device is from the at least two terminal devices. This reduces non-uniformity of data distribution in federated learning. Compared with training performed in the terminal device, training performed in the first network device reduces a quantity of distributed units of the federated learning, further improves non-uniformity of distribution of the training data, and improves convergence of federated learning training. Therefore, performance of the federated learning is improved.

## Description

This application claims priority to Chinese Patent Application No. 202111267081.8, filed with the China National Intellectual Property Administration on October 28, 2021 and entitled "FEDERATED LEARNING METHOD AND RELATED APPARATUS", which is incorporated herein by reference in its entirety.

### TECHNICAL FIELD

This application relates to the field of communication technologies, and in particular, to a federated learning method and a related apparatus.

### BACKGROUND

Federated learning is a training mode in which terminal devices implement unified model training by exchanging and integrating locally trained models without uploading training data to a central facility.

In a communication network, a training process of the federated learning is completed through interaction between the terminal devices and the central facility. The training data is stored in the terminal devices. The terminal devices perform model training based on the local training data, and upload model gradients to the central facility. The central facility updates a global model after summarizing the model gradients uploaded by the terminal devices, and then broadcasts the global model to the terminal devices as a model for a next round of training. In this way, exchanging of the trained models is completed. The federated learning is completed through collaboration between the distributed terminal devices and the central facility. Training datasets of the terminal devices usually differ greatly, and data distribution is non-uniform. As a result, a convergence speed and precision of federated learning training are reduced, convergence is poor, or even convergence is not performed, and performance of the federated learning is poor.

### SUMMARY

This application provides a federated learning method and a related apparatus, to improve convergence of federated learning training, thereby improving performance of federated learning.

According to a first aspect, this application provides a federated learning method. The method is applied to a first network device and includes: obtaining local training data of at least two terminal devices; processing the local training data of the at least two terminal devices, to obtain training datasets; performing model training based on the training datasets, to obtain a model gradient; and sending the model gradient to a second network device.

In the foregoing method, the first network device obtains the local training data of the at least two terminal devices. A model training process is performed in the first network device, and the first network device and the second network device perform model exchanging and integration, to finally obtain a trained federated learning model. In this way, training data of the first network device is from the at least two terminal devices. This reduces non-uniformity of data distribution in federated learning. Compared with training performed in the terminal device, training performed in the first network device reduces a quantity of distributed units of the federated learning, further improves non-uniformity of distribution of the training data, and improves convergence of federated learning training. Therefore, performance of the federated learning is improved.

With reference to the first aspect, in a possible implementation of the first aspect, the processing the local training data of the at least two terminal devices includes: maintaining a local data resource list based on data information of the local training data; preprocessing the local training data, and caching preprocessed local training data; and caching the local training data, and storing an index of the local training data in the local data resource list.

In the foregoing implementation, the local training data is preprocessed, and the preprocessed local training data is cached. This facilitates model training subsequently performed based on the preprocessed local training data. The local training data is cached, and the index of the local training data is stored in the local data resource list. In this way, when model training is performed next time, in addition to the local training data re-obtained from the terminal device, the training data may be obtained from the local data resource list as required. This enriches a quantity of pieces of training data and categories of the training data.

With reference to the first aspect, in a possible implementation of the first aspect, the local data resource list further includes at least one of the following information: a sample category label, a sample form label, and a sample quantity.

With reference to the first aspect, in a possible implementation of the first aspect, the method further includes: receiving federated learning service information sent by the second network device, where the federated learning service information includes at least one of the following: a service identifier, a training objective, a required data format, and a required data category.

In the foregoing implementation, the first network device receives the federated learning service information sent by the second network device. In this way, the first network device may match local resource information of the first network device with the federated learning service information, to determine whether to join a federated learning service.

With reference to the first aspect, in a possible implementation of the first aspect, the performing model training based on the training datasets includes: obtaining a first index from the local data resource list based on the federated learning service information; obtaining cached training data corresponding to the first index; and performing model training based on the preprocessed local training data and the cached training data.

In the foregoing implementation, during model training, the cached training data is obtained based on the federated learning service information, and training is performed based on the preprocessed local training data and the cached training data. This enriches a quantity of pieces of training data and categories of the training data, and improves performance of federated learning.

With reference to the first aspect, in a possible implementation of the first aspect, before the obtaining local training data of at least two terminal devices, the method further includes: obtaining local resource information of the first network device; and matching the local resource information of the first network device with the federated learning service information, and determining to enable the first network device to join a federated learning service.

In the foregoing implementation, before obtaining the local training data of the terminal device, the first network device needs to determine whether to join the federated learning service. This can avoid a case in which the first network device obtains the local training data of the terminal device when the first network device does not join the federated learning service, and avoid occupation of a communication resource.

With reference to the first aspect, in a possible implementation of the first aspect, before the obtaining local training data of at least two terminal devices, the method further includes: obtaining training data information sent by the terminal device; and matching the training data information sent by the terminal device with the federated learning service information, and determining to enable the terminal device to join the federated learning service.

In the foregoing implementation, before obtaining the local training data of the terminal device, the first network device needs to determine whether to enable the terminal device to join the federated learning service. This can avoid a case in which the first network device obtains the local training data of the terminal device when the terminal device does not join the federated learning service, and avoid occupation of a communication resource.

With reference to the first aspect, in a possible implementation of the first aspect, the method further includes: receiving an updated training model sent by the second network device.

In the foregoing implementation, the first network device receives the updated training model sent by the second network device, and performs a next round of model training by using the updated training model.

With reference to the first aspect, in a possible implementation of the first aspect, the method further includes: sending a trained federated learning model to the terminal device, where the federated learning model is converged, or a quantity of training rounds of the first network device is not less than a preset threshold of the quantity of training rounds.

In the foregoing implementation, the first network device sends the trained federated learning model to the terminal device, and the terminal device may support a local intelligent service by using the federated learning model.

With reference to the first aspect, in a possible implementation of the first aspect, the first network device is deployed in an access network; the first network device is deployed in a local computing center, and the local computing center communicates with the at least two terminal devices via an access network device; or the first network device is deployed in an edge server, and the edge server communicates with the at least two terminal devices via an access network device.

According to a second aspect, this application provides a federated learning method. The method is applied to a second network device and includes: receiving a model gradient sent by a first network device; integrating model gradients, to obtain an updated training model; and sending the updated training model to the first network device.

In the foregoing method, the second network device receives the model gradient sent by the first network device, and sends the updated training model to the first network device. A model training process is performed in the first network device, and the first network device and the second network device perform model exchanging and integration, to finally obtain a trained federated learning model. Training data of the first network device is from at least two terminal devices. This reduces non-uniformity of data distribution in federated learning. Compared with training performed in the terminal device, training performed in the first network device reduces a quantity of distributed units of the federated learning, further improves non-uniformity of distribution of the training data, and improves convergence of federated learning training. Therefore, performance of the federated learning is improved.

With reference to the second aspect, in a possible implementation of the second aspect, the method further includes: receiving federated learning service information sent by a cloud server, where the federated learning service information includes at least one of the following: a service identifier, a training objective, a required data format, and a required data category; and sending the federated learning service information to the first network device.

In the foregoing implementation, the second network device receives the federated learning service information sent by the cloud server, and sends the federated learning service information to the first network device. In this way, the first network device may match local resource information of the first network device with the federated learning service information, to determine whether to join a federated learning service.

With reference to the second aspect, in a possible implementation of the second aspect, the method further includes: sending training progress information to the cloud server, where the training progress information includes at least one of the following information: a model error, test accuracy, a quantity of training rounds, and statistical information of a training dataset.

In the foregoing implementation, the second network device sends the training progress information to the cloud server. In this way, the cloud server may feed back the training progress information to a cloud application, and the cloud application evaluates a model training degree based on the training progress information, to determine whether to stop training.

With reference to the second aspect, in a possible implementation of the second aspect, the method further includes: sending a trained federated learning model to the cloud server, where the federated learning model is converged, or a quantity of training rounds of the first network device is not less than a preset threshold of the quantity of training rounds.

In the foregoing implementation, the second network device sends the trained federated learning model to the cloud server, and the cloud server may support a cloud intelligent service by using the federated learning model.

With reference to the second aspect, in a possible implementation of the second aspect, before the receiving a model gradient sent by a first network device, the method further includes: receiving data information sent by the first network device; and determining, based on the data information sent by the first network device, to enable the first network device to join a federated learning service.

In the foregoing implementation, before receiving the model gradient sent by the first network device, the second network device needs to determine whether to enable the first network device to join the federated learning service. This can avoid a case in which the second network device receives the model gradient sent by the first network device when the first network device does not join the federated learning service, and avoid occupation of a communication resource.

With reference to the second aspect, in a possible implementation of the second aspect, the second network device is deployed in a core network.

According to a third aspect, this application provides a federated learning method. The method is applied to a terminal device and includes: preprocessing local data, to obtain local training data; and sending the local training data to a first network device.

In the foregoing method, the terminal device sends the local training data to the first network device, and the first network device obtains local training data of at least two terminal devices. A model training process is performed in the first network device, and the first network device and a second network device perform model exchanging and integration, to finally obtain a trained federated learning model. In this way, training data of the first network device is from the at least two terminal devices. This reduces non-uniformity of data distribution in federated learning. Compared with training performed in the terminal device, training performed in the first network device reduces a quantity of distributed units of the federated learning, further improves non-uniformity of distribution of training data, and improves convergence of federated learning training. Therefore, performance of the federated learning is improved.

With reference to the third aspect, in a possible implementation of the third aspect, the method further includes: receiving federated learning service information sent by the first network device, where the federated learning service information includes at least one of the following: a service identifier, a training objective, a required data format, and a required data category.

In the foregoing implementation, the terminal device receives the federated learning service information sent by the first network device, and selects, based on the federated learning service information, the local training data to be sent to the first network device.

With reference to the third aspect, in a possible implementation of the third aspect, before the sending the local training data to a first network device, the method further includes: determining, based on local resource information of the terminal device, to enable the terminal device to join a federated learning service.

In the foregoing implementation, before sending the local training data to the first network device, the terminal device needs to determine whether to join the federated learning service. This can avoid a case in which the terminal device sends the local training data to the first network device when the terminal device does not join the federated learning service, and avoid occupation of a communication resource.

With reference to the third aspect, in a possible implementation of the third aspect, after the determining to enable the terminal device to join the federated learning service, the method further includes: sending a service joining request to the first network device, where the service joining request includes training data information of the terminal device.

In the foregoing implementation, the terminal device sends the service joining request to the first network device. In this way, the first network device may determine whether to enable the terminal device to join the federated learning service.

With reference to the third aspect, in a possible implementation of the third aspect, the method further includes: receiving a trained federated learning model sent by the first network device, where the federated learning model is converged, or a quantity of training rounds of the first network device is not less than a preset threshold of the quantity of training rounds.

In the foregoing implementation, the terminal device receives the trained federated learning model sent by the first network device, and the terminal device may support a local intelligent service by using the federated learning model.

According to a fourth aspect, this application provides a communication apparatus. The communication apparatus may be used in the first network device in the first aspect. The communication apparatus may be the first network device, or may be an apparatus (for example, a chip, a chip system, or a circuit) in the first network device, or may be an apparatus that can be used together with the first network device.

In a possible implementation, the communication apparatus may include modules or units that are in one-to-one correspondence with the methods/operations/steps/actions described in the first aspect. The modules or units may be hardware circuits, or may be software, or may be implemented by a hardware circuit in combination with software.

In a possible implementation, the communication apparatus includes a processing module and a transceiver module. The processing module is configured to: obtain local training data of at least two terminal devices; process the local training data of the at least two terminal devices, to obtain training datasets; and perform model training based on the training datasets, to obtain a model gradient. The transceiver module is configured to send the model gradient to a second network device.

With reference to the fourth aspect, in a possible implementation of the fourth aspect, the processing module is specifically configured to: maintain a local data resource list based on data information of the local training data; preprocess the local training data, and cache preprocessed local training data; and cache the local training data, and store an index of the local training data in the local data resource list.

With reference to the fourth aspect, in a possible implementation of the fourth aspect, the local data resource list further includes at least one of the following information: a sample category label, a sample form label, and a sample quantity.

With reference to the fourth aspect, in a possible implementation of the fourth aspect, the transceiver module is further configured to: receive federated learning service information sent by the second network device, where the federated learning service information includes at least one of the following: a service identifier, a training objective, a required data format, and a required data category.

With reference to the fourth aspect, in a possible implementation of the fourth aspect, the processing module is specifically configured to: obtain a first index from the local data resource list based on the federated learning service information; obtain cached training data corresponding to the first index; and perform model training based on the preprocessed local training data and the cached training data.

With reference to the fourth aspect, in a possible implementation of the fourth aspect, the processing module is further configured to: obtain local resource information of the communication apparatus; and match the local resource information of the communication apparatus with the federated learning service information, and determine to enable the communication apparatus to join a federated learning service.

With reference to the fourth aspect, in a possible implementation of the fourth aspect, the processing module is further configured to: obtain training data information sent by the terminal device; and match the training data information sent by the terminal device with the federated learning service information, and determine to enable the terminal device to join the federated learning service.

With reference to the fourth aspect, in a possible implementation of the fourth aspect, the transceiver module is further configured to: receive an updated training model sent by the second network device.

With reference to the fourth aspect, in a possible implementation of the fourth aspect, the transceiver module is further configured to: send a trained federated learning model to the terminal device, where the federated learning model is converged, or a quantity of training rounds of the communication apparatus is not less than a preset threshold of the quantity of training rounds.

With reference to the fourth aspect, in a possible implementation of the fourth aspect, the communication apparatus is deployed in an access network; the communication apparatus is deployed in a local computing center, and the local computing center communicates with the at least two terminal devices via an access network device; or the communication apparatus is deployed in an edge server, and the edge server communicates with the at least two terminal devices via an access network device.

According to a fifth aspect, this application provides a communication apparatus. The communication apparatus may be used in the second network device in the second aspect. The communication apparatus may be the second network device, or may be an apparatus (for example, a chip, a chip system, or a circuit) in the second network device, or may be an apparatus that can be used together with the second network device.

In a possible implementation, the communication apparatus may include modules or units that are in one-to-one correspondence with the methods/operations/steps/actions described in the second aspect. The modules or units may be hardware circuits, or may be software, or may be implemented by a hardware circuit in combination with software.

In a possible implementation, the communication apparatus includes a transceiver module and a processing module. The transceiver module is configured to receive a model gradient sent by a first network device. The processing module is configured to integrate model gradients, to obtain an updated training model. The transceiver module is further configured to send the updated training model to the first network device.

With reference to the fifth aspect, in a possible implementation of the fifth aspect, the transceiver module is further configured to: receive federated learning service information sent by a cloud server, where the federated learning service information includes at least one of the following: a service identifier, a training objective, a required data format, and a required data category; and send the federated learning service information to the first network device.

With reference to the fifth aspect, in a possible implementation of the fifth aspect, the transceiver module is further configured to: send training progress information to the cloud server, where the training progress information includes at least one of the following information: a model error, test accuracy, a quantity of training rounds, and statistical information of a training dataset.

With reference to the fifth aspect, in a possible implementation of the fifth aspect, the transceiver module is further configured to: send a trained federated learning model to the cloud server, where the federated learning model is converged, or a quantity of training rounds of the first network device is not less than a preset threshold of the quantity of training rounds.

With reference to the fifth aspect, in a possible implementation of the fifth aspect, the transceiver module is further configured to receive data information sent by the first network device. The processing module is further configured to determine, based on the data information sent by the first network device, to enable the first network device to join a federated learning service.

With reference to the fifth aspect, in a possible implementation of the fifth aspect, the communication apparatus is deployed in a core network.

According to a sixth aspect, this application provides a communication apparatus. The communication apparatus may be used in the terminal device in the third aspect. The communication apparatus may be the terminal device, or may be an apparatus (for example, a chip, a chip system, or a circuit) in the terminal device, or may be an apparatus that can be used together with the terminal device.

In a possible implementation, the communication apparatus may include modules or units that are in one-to-one correspondence with the methods/operations/steps/actions described in the third aspect. The modules or units may be hardware circuits, or may be software, or may be implemented by a hardware circuit in combination with software.

In a possible implementation, the communication apparatus includes a processing module and a transceiver module. The processing module is configured to preprocess local data, to obtain local training data. The transceiver module is configured to send the local training data to a first network device.

With reference to the sixth aspect, in a possible implementation of the sixth aspect, the transceiver module is further configured to: receive federated learning service information sent by the first network device, where the federated learning service information includes at least one of the following: a service identifier, a training objective, a required data format, and a required data category.

With reference to the sixth aspect, in a possible implementation of the sixth aspect, the processing module is further configured to: determine, based on local resource information of the communication apparatus, to enable the communication apparatus to join a federated learning service.

With reference to the sixth aspect, in a possible implementation of the sixth aspect, the transceiver module is further configured to: send a service joining request to the first network device, where the service joining request includes training data information of the communication apparatus.

With reference to the sixth aspect, in a possible implementation of the sixth aspect, the transceiver module is further configured to: receive a trained federated learning model sent by the first network device, where the federated learning model is converged, or a quantity of training rounds of the first network device is not less than a preset threshold of the quantity of training rounds.

According to a seventh aspect, this application provides a communication apparatus, including a processor coupled to a memory. The memory is configured to store a computer program; and when executing the program, the processor implements the method according to any one of the first aspect or the possible implementations of the first aspect.

According to an eighth aspect, this application provides a communication apparatus, including a processor coupled to a memory. The memory is configured to store a computer program; and when executing the program, the processor implements the method according to any one of the second aspect or the possible implementations of the second aspect.

According to a ninth aspect, this application provides a communication apparatus, including a processor coupled to a memory. The memory is configured to store a computer program; and when executing the program, the processor implements the method according to any one of the third aspect or the possible implementations of the third aspect.

According to a tenth aspect, this application provides a computer-readable storage medium. The computer-readable storage medium is configured to store instructions; and when the instructions are executed by a processor, the method according to any one of the first aspect or the possible implementations of the first aspect is performed.

According to an eleventh aspect, this application provides a computer-readable storage medium. The computer-readable storage medium is configured to store instructions; and when the instructions are executed by a processor, the method according to any one of the second aspect or the possible implementations of the second aspect is performed.

According to a twelfth aspect, this application provides a computer-readable storage medium. The computer-readable storage medium is configured to store instructions; and when the instructions are executed by a processor, the method according to any one of the third aspect or the possible implementations of the third aspect is performed.

According to a thirteenth aspect, this application provides a computer program product including instructions. When the computer program product runs on a computer, the method according to any one of the first aspect or the possible implementations of the first aspect, the method according to any one of the second aspect or the possible implementations of the second aspect, or the method according to any one of the third aspect or the possible implementations of the third aspect is performed.

According to a fourteenth aspect, this application provides a communication system. The communication system includes the communication apparatuses according to the fourth aspect, the fifth aspect, and the sixth aspect, or the communication apparatuses according to the seventh aspect, the eighth aspect, and the ninth aspect.

### BRIEF DESCRIPTION OF DRAWINGS

FIG. 1 is a schematic interaction diagram of federated learning;
FIG. 2 is a schematic diagram of a training process of federated learning;
FIG. 3 is a schematic diagram of a training process of federated learning in a communication network;
FIG. 4 is a schematic diagram of a system architecture of federated learning according to an embodiment of this application;
FIG. 5 is a schematic interaction diagram of federated learning according to an embodiment of this application;
FIG. 6 is a schematic interaction diagram of a federated learning method according to an embodiment of this application;
FIG. 7 is a schematic interaction diagram of service deployment in a federated learning method according to an embodiment of this application;
FIG. 8 is a schematic interaction diagram of training data preparation in a federated learning method according to an embodiment of this application;
FIG. 9 is a schematic interaction diagram of another federated learning method according to an embodiment of this application;
FIG. 10 is a schematic diagram of a communication apparatus according to an embodiment of this application; and
FIG. 11 is a schematic diagram of another communication apparatus according to an embodiment of this application.

### DESCRIPTION OF EMBODIMENTS

The following describes technical solutions of this application with reference to accompanying drawings.

The following describes some terms in embodiments of this application, to facilitate understanding of a person skilled in the art.

The technical solutions in this application may be applied to a cellular system related to the 3rd generation partnership project (3rd generation partnership project, 3GPP), for example, a 4th generation (4th generation, 4G) communication system such as a long term evolution (long term evolution, LTE) system, or a 5th generation (5th generation, 5G) communication system such as a new radio (new radio, NR) system, or may be applied to a wireless fidelity (wireless fidelity, Wi-Fi) system, a communication system that supports convergence of a plurality of wireless technologies, or a future-oriented evolution system.

Embodiments of this application relate to a terminal device. The terminal device includes a device that provides voice and/or data connectivity for a user, and may include, for example, a handheld device with a wireless connection function or a processing device connected to a wireless modem. When the terminal device is a 5G terminal, the terminal device may communicate with a core network through a radio access network (radio access network, RAN), and exchange voice and/or data with the RAN. The terminal device may include user equipment (user equipment, UE), a wireless terminal device, a mobile terminal device, a communication device carried on a high-altitude aircraft, an unmanned aerial vehicle, a robot, a device-to-device (device-to-device, D2D) communication terminal device, a vehicle-to-everything (vehicle-to-everything, V2X) terminal device, a machine-to-machine/machine type communication (machine-to-machine/machine-type communication, M2M/MTC) terminal device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in smart grid (smart grid), a wireless terminal in transportation safety (transportation safety), a wireless terminal in a smart city (smart city), a wireless terminal in a smart home (smart home), an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), or a user device (user device). For example, the terminal device may include a mobile phone (or referred to as a "cellular" phone), a computer having a mobile terminal device, or a portable, pocket-sized, hand-held, or a computer-embedded mobile apparatus. For example, the terminal device may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, a radio frequency identification (radio frequency identification, RFID), a sensor, a global positioning system (global positioning system, GPS), and a laser scanner, or a terminal device in a future communication network. This is not limited in embodiments of this application.

By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

Embodiments of this application further relate to a first network device. The first network device is deployed in an access network, and may be an access network device; the first network device is deployed in a local computing center, and the local computing center communicates with at least two terminal devices via an access network device; or the first network device is deployed in an edge server, and the edge server communicates with at least two terminal devices via an access network device. The access network device may be a network side device in a 5G network, or may be an evolved NodeB (evolved NodeB, eNB or eNodeB) in an LTE system. Optionally, the access network device in embodiments of this application may include various forms of base stations, for example, a macro base station, a micro base station (also referred to as a small cell), a relay station, an access point, a 5G base station, a device for implementing a base station function in the future, an access node in a Wi-Fi system, a transmission point (transmission reception point, TRP), a transmission point (transmission point, TP), a mobile switching center, a device that undertakes a base station function in device-to-device (Device-to-Device, D2D), vehicle-to-everything (vehicle-to-everything, V2X), and machine-to-machine (machine-to-machine, M2M) communication, or the like. This is not specifically limited in embodiments of this application.

Embodiments of this application further relate to a second network device, and the second network device is deployed in a core network.

In embodiments of this application, "at least one" refers to one or more, and "a plurality of" refers to two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first information and second information are merely used to distinguish between different information, but do not indicate that the two types of information are different in content, priorities, sending sequences, importance, or the like.

For ease of understanding of this application, concepts in this application are first explained.

A model gradient is an update amount of a network model weight during training of a neural network. An updated model weight may be obtained by adding an update gradient to an original model gradient.

Convergence: After several rounds of training are performed in the neural network, if a model weight of the neural network tends to be stable and a training error tends to be a small value, the training is converged.

With development of the internet of things, an intelligent terminal will become a mainstream of future development. The intelligent terminal is a terminal device having a computing processing function, for example, a band, a mobile phone, an autonomous driving car, or an intelligent home.

The intelligent terminal generates related data in a working process, and a large amount of data is accumulated. Performing big data processing on these distributed data becomes a core service. For example, in the health field, various terminal devices, including the band, generate physical health data of a user every day. Analyzing and mining the physical health data in a cloud is an important service. In the recommendation field, mining of data information in a personal mobile phone is critical to improving a recommendation level of an application in the cloud. In the autonomous driving field, mining of driving data of various vehicles is critical to improving precision of a driving system. However, in this type of application, data of the intelligent terminal usually involves privacy, and the data is dynamically generated in real time. Centralized training directly performed in the cloud cannot meet an increasing application requirement. Therefore, a distributed learning algorithm represented by federated learning is an important solution to support this type of service. The federated learning is a training mode in which terminal devices implement unified model training by exchanging and integrating locally trained models without uploading training data to a center. Interaction between units in the federated learning requires network support, and therefore, the network support is very important for implementation of the federated learning.

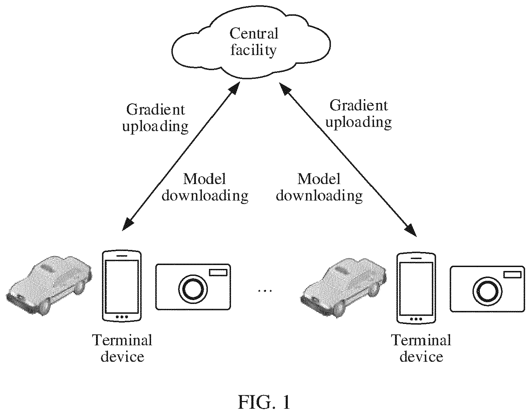

An advantage of the federated learning is that the federated learning can train a common machine learning model based on the data of the terminals, and the center does not need to collect and manage these data. FIG. 1 is a schematic interaction diagram of federated learning. As shown in FIG. 1, a federated learning training process is completed through interaction between terminal devices and a central facility. Training data is stored in a memory of each terminal device, and model training is also independently completed by the terminal device. The central facility forms an initial model (for example, a dense neural network (dense neural network, DNN) or a convolutional neural network (convolutional neural network, CNN)) according to an application requirement, and broadcasts the initial model to all the terminal devices. The terminal devices perform model training based on local datasets and upload gradients. The central facility updates a model weight after summarizing the gradients uploaded by the terminal devices, and then broadcasts the model weight to the terminal devices as an initial weight for a next round of training. In this way, exchanging of trained models is completed.

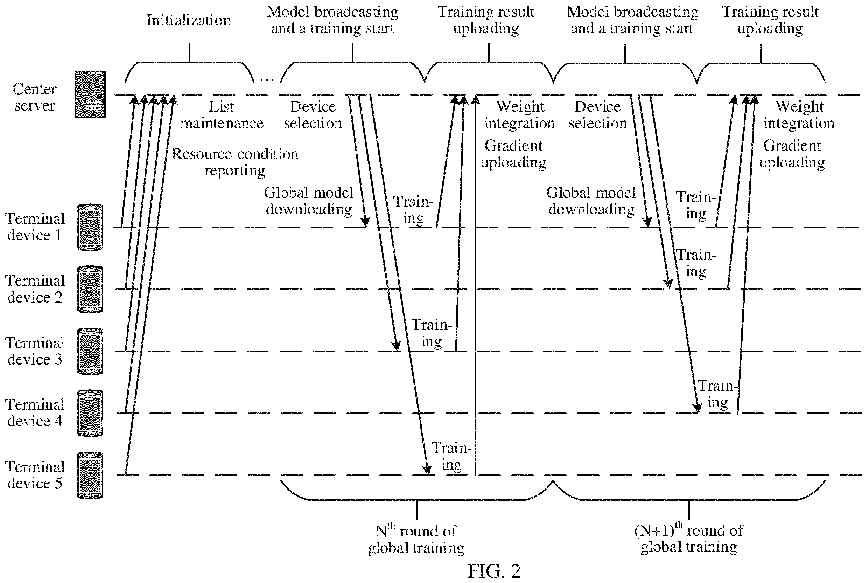

FIG. 2 is a schematic diagram of a training process of federated learning. As shown in FIG. 2, in a training initialization phase, a terminal device participating in training reports a local training resource condition (excluding local original training data) to a center server. After summarizing local resource information of terminal devices, the center server maintains a training resource list, which is used to subsequently perform selection on the terminal devices. In a training phase, each time a round of training is performed, the center server first performs selection on the terminal devices, to determine a terminal device that participates in the current round of model training. After selection is completed, the center server sends a global model to the terminal device participating in the training, where a model structure is provided by an application in advance. The terminal device receives the global model and uses a received model weight as an initial weight for local training. Based on a local training dataset, each terminal device locally performs several rounds of training. After completing the local training, the terminal device uploads an update gradient of the model weight to the center server. The center server integrates collected update gradients of the weight, to form a new global model. In this way, a round of global training is completed. For example, in an N^{th} round of training, terminal devices that are selected and that participate in the current round of training are a terminal device 1, a terminal device 3, and a terminal device 5. The center server sends the global model to the terminal device 1, the terminal device 3, and the terminal device 5. The terminal device 1, the terminal device 3, and the terminal device 5 each perform several rounds of local training, and each upload an update gradient of the model weight to the center server. In an (N+1)^{th} round of training, terminal devices that are selected and that participate in the current round of training are the terminal device 1, a terminal device 2, and a terminal device 4. The center server sends the global model to the terminal device 1, the terminal device 2, and the terminal device 4. The terminal device 1, the terminal device 2, and the terminal device 4 each perform several rounds of local training, and each upload an update gradient of the model weight to the center server. During overall federated learning, several rounds of global training are completed based on the foregoing processes, until the model is converged or a quantity of training rounds reaches a preset maximum quantity of rounds.

The training process of the federated learning is completed through interaction between the terminal devices and the central facility, and performance (convergence and a training delay) of the federated learning is also affected due to decentralization of the terminal devices. In terms of the convergence, training datasets of the terminal devices usually differ greatly. For example, some terminal devices obtain pictures about a cat, and some terminal devices obtain pictures about a dog. In this case, when data of the terminal devices differs greatly, a convergence speed of training is greatly reduced, or even convergence is not performed. In terms of the training delay, each terminal device needs to receive the global model, and uploads an update gradient to the central facility for integration after completing local training. In the process, whether the terminals can complete training in a coordinated manner directly affects a delay of a current round.

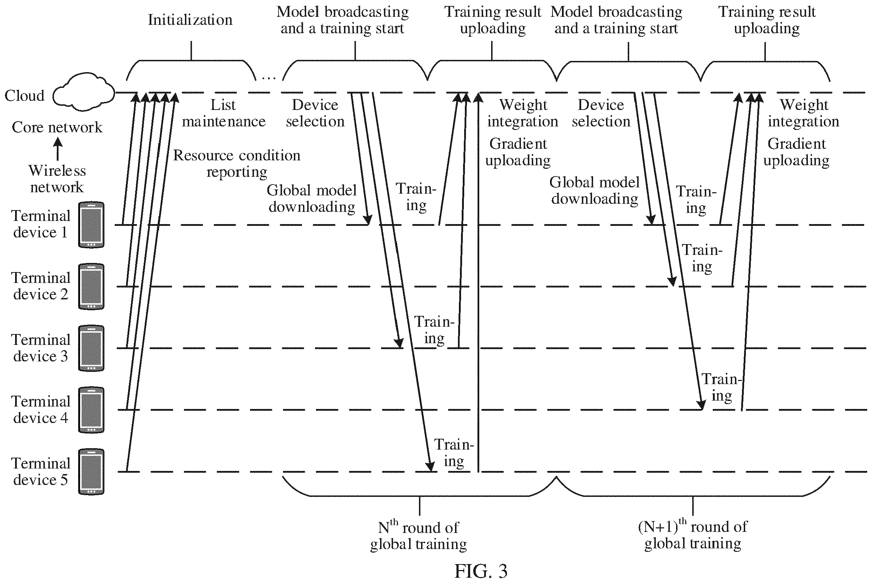

FIG. 3 is a schematic diagram of a training process of federated learning in a communication network. As shown in FIG. 3, a cloud is used as a central facility, training data is distributed and stored in terminal devices, the cloud and the terminal devices form a two-layer federated learning architecture, and two interaction parties are the cloud and the distributed terminal devices. On a premise that data is not collected in a centralized manner, a cloud application performs big data processing based on datasets on the distributed terminal devices, to obtain a machine learning model trained based on these datasets, where the machine learning model is configured to support an application function.

It can be learned from FIG. 3 that, the terminal devices and the cloud implement interactive connection communication in a manner of combining a backbone core network and an end wireless network. When the terminal device uploads an update gradient, the update gradient is first uploaded to an access network device via the wireless network, and then forwarded by the access network device to the cloud via the core network. When the terminal device downloads a model from the cloud, the model is first sent, via the core network, to an access network device at an address corresponding to the terminal device, and then the terminal device downloads the model from the access network device via the wireless network. Training is completed in the distributed terminal devices, and model weight integration is completed in the cloud. The terminal devices complete each round of global training under coordination of the cloud, until the model is converged or a maximum quantity of training rounds is reached.

Because a data amount of each terminal device is small, and distributed training can be completed in a short period of time, an interval between two rounds of communication is also very short. Therefore, there are frequent gradient uploading and model downloading between the cloud and the terminal devices. Because a communication process directly passes through the core network, and a quantity of distributed terminal devices is large, a large quantity of core network communication resources are occupied. The training data in the distributed terminal devices usually differs greatly. This phenomenon is referred to as data non-independent identically distribution(non-independent identically distribution, non-i.i.d.) in the federated learning. The phenomenon of data non-independent identically distribution causes great reduction of a convergence speed and precision of the federated learning, or even a case in which convergence cannot be performed. In an actual communication network, an environment and a working state of each distributed terminal device are usually highly random. In the process of the federated learning, phenomena such as damage, disconnection, and a delay often occur on the terminal devices and are difficult to predict. Therefore, it is difficult to coordinate the cloud to directly interact with the terminal devices to perform federated learning. It can be learned that, it is difficult to apply federated learning performed by the cloud and the terminal devices through interaction in a large-scale network.

The background technology of this application has been introduced above, and technical features of embodiments of this application are introduced below.

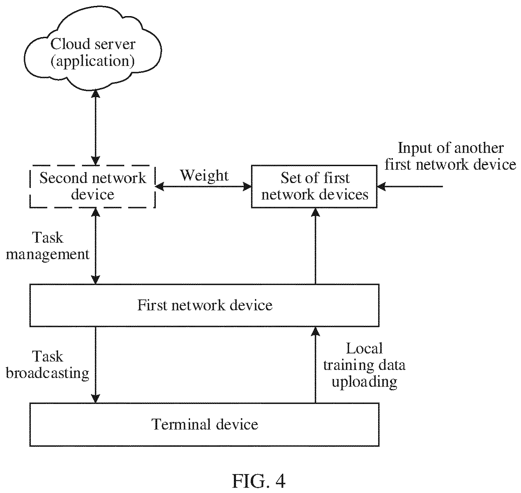

FIG. 4 is a schematic diagram of a system architecture of federated learning according to an embodiment of this application. A federated learning system shown in FIG. 4 serves a center application on a cloud server and distributed terminal devices with local data, and a service supported by the system is a federated learning service that is initiated by a cloud application and that is oriented to distributed big data processing.

From a perspective of the terminal device, a first network device provides an interface for a local terminal device to join the federated learning service. The first network device sends, to the terminal device, federated learning service information initiated by the center application, and caches local training data uploaded by the terminal device. The terminal device obtains the federated learning service information and joins federated learning training by using the first network device.

From a perspective of the first network device, the first network device preprocesses the cached local training data, and maintains a local data resource list based on the local training data. In addition to preprocessing the data and maintaining the local data resource list, the first network device performs model training based on the local training data. In addition, the first network device supports management of the federated learning service. The management includes service reading, local resource evaluation, service running condition feedback, service delivery, and the like.

In a possible implementation, the federated learning system does not include a second network device. From a perspective of the cloud server, the cloud application delivers the federated learning service to the first network device. A specific process in which the cloud server, as a central facility, interacts with the first network device participating in the federated learning includes: The cloud server receives model gradients uploaded by a set of first network devices, performs integration on the model gradients, to obtain an updated model weight, and then sends the updated model weight to the first network device until a training process of the federated learning service is completed. The cloud application finally obtains a trained federated learning model, to complete the federated learning service. In addition, the terminal device may alternatively obtain, from the first network device, the federated learning model obtained through training.

In a possible implementation, the federated learning system includes a second network device. From a perspective of the second network device, to ensure that a third-party cloud application does not obtain network data, the second network device is deployed in a core network, and the cloud application accesses a network through an interface provided by the second network device, to deliver the federated learning service. A specific process in which the second network device, as a central facility, interacts with the first network device participating in the federated learning includes: The second network device receives model gradients uploaded by a set of first network devices, performs integration on the model gradients, to obtain an updated model weight, and then sends the updated model weight to the first network device until a training process of the federated learning service is completed. A federated learning model obtained through training is then fed back to the cloud application via the second network device, to complete the federated learning service. In addition, the terminal device may alternatively obtain, from the first network device, the federated learning model obtained through training.

From a perspective of the cloud server, the first network device, as a basic training unit supporting the federated learning, collaborates with the second network device to complete the federated learning training.

With reference to the federated learning system shown in FIG. 4, a recommendation service is used as an example for description. A cloud recommendation application needs to perform learning based on data stored in a terminal such as a mobile phone of each user, to obtain a recommended model, and the recommendation application cannot obtain the user data. A process of the federated learning includes: The cloud recommendation application accesses a network via the second network device, and inputs, into the second network device, federated learning service information (including information such as a training model, a service objective, and a data requirement) corresponding to the recommendation service. The second network device determines the federated learning service information and establishes the recommendation service, and then the second network device sends the federated learning service information to the distributed first network devices in the set of first network devices. The first network device receives the federated learning service information, obtains the local training data of the terminal device, and forms a training dataset of the recommendation service with reference to the local original cached training data of the first network device. The second network device performs training weight balancing in the set of first network devices based on a data resource condition of each first network device, to establish a learning architecture oriented to the recommendation service. Then, the set of first network devices interact with the second network device to complete the federated learning training, local training is completed in the first network device, and weight integration is completed in the second network device. After the training ends, the recommended model is formed. The second network device feeds back the recommended model to the cloud application, to guide an intelligent recommendation function of the cloud application, and complete the recommendation service.

It can be learned that, in the federated learning system provided in this embodiment of this application, the first network device provides the interface for the local terminal device to join the federated learning service, and the cloud server or the second network device, as the central facility, collaborates with the first network device to complete the federated learning training. In the federated learning system provided in this embodiment of this application, convergence of the federated learning may be improved, and system complexity and a communication resource loss may be reduced.

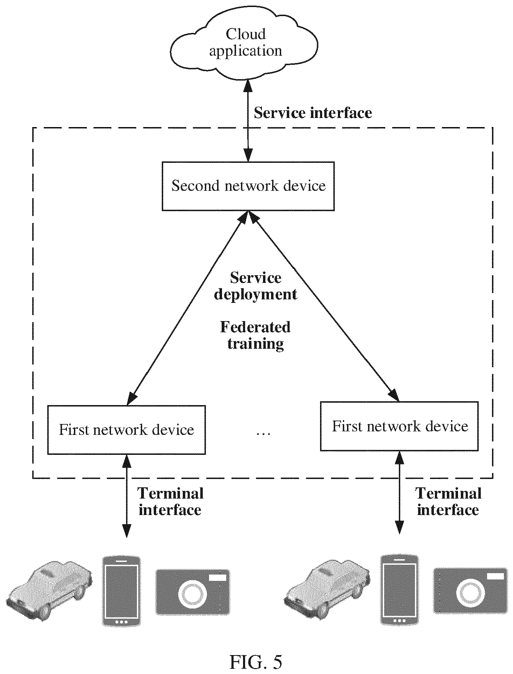

FIG. 5 is a schematic interaction diagram of federated learning according to an embodiment of this application. As shown in FIG. 5, a federated learning training process is completed through interaction between first network devices and a second network device. The first network device is deployed in an access network; the first network device is deployed in a local computing center, and the local computing center communicates with at least two terminal devices via an access network device; or the first network device is deployed in an edge server, and the edge server communicates with at least two terminal devices via an access network device. The second network device is deployed in a core network.

The first network device provides an interface for the terminal device to join a federated learning service. The second network device, as a central facility, provides a service deployment interface for a cloud application, and manages and maintains all federated learning services and a set of first network devices participating in federated learning training. In the training process, the second network device sends service information to the first network device, the first network device obtains local training data of the terminal device to perform model training. The second network device, as the central facility, is responsible for integrating model gradients sent by the first network devices, and collaborates with the first network device to complete the federated learning training.

The first network device and the second network device are deployed in a network, provide interfaces for a third-party cloud application and the terminal device, and collaborate with each other to support the federated learning service. In addition to supporting the federated learning service, the first network device and the second network device may also support a distributed big data processing service in another algorithm.

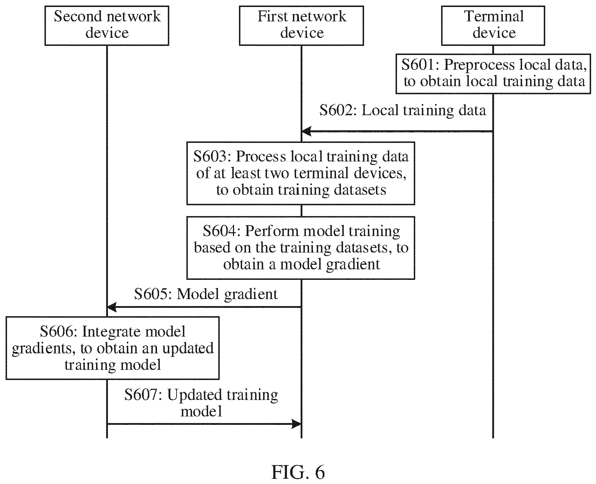

FIG. 6 is a schematic interaction diagram of a federated learning method according to an embodiment of this application. As shown in FIG. 6, the federated learning method includes the following steps.
S601:A terminal device preprocesses local data, to obtain local training data.

Optionally, preprocessing performed by the terminal device on the local data includes anonymization processing and/or feature extraction.

Specifically, the terminal device preprocesses the local data, for example, anonymizes a data ID or extracts a data feature, to obtain the local training data, and then sends the local training data to a first network device.

Optionally, the terminal device receives federated learning service information sent by the first network device, where the federated learning service information includes at least one of the following: a service identifier, a training objective, a required data format, and a required data category.

Specifically, after receiving the federated learning service information, the terminal device selects local data that meets the required data format and the required data category that are included in the information, and then preprocesses the local data.

In a possible implementation, before sending the local training data to the first network device, the terminal device determines, based on local resource information of the terminal device, to enable the terminal device to join a federated learning service.

Specifically, before sending the local training data to the first network device, the terminal device needs to determine whether to join the federated learning service. This can avoid a case in which the terminal device sends the local training data to the first network device when the terminal device does not join the federated learning service, and avoid occupation of a communication resource. The local resource information of the terminal device includes at least one of the local data, a terminal capability, and subscription information. The terminal device determines a matching degree between the local data and the required data format and the required data category, to determine whether training data required by the federated learning service is stored. In addition, the terminal device further needs to determine, based on the terminal capability and the subscription information, whether the data can be uploaded. If a condition that the training data required by the service is stored and the data can be uploaded is met, the terminal device determines to join the federated learning service.

In a possible implementation, after determining to join the federated learning service, the terminal device sends a service joining request to the first network device, where the service joining request includes training data information of the terminal device. The training data information of the terminal device includes at least one of a feature attribute, a data amount, and a data update time point of the training data.

Specifically, after determining to join the federated learning service, the terminal device further needs to send the service joining request to the first network device. After receiving the service joining request, the first network device determines whether to enable the terminal device to join the federated learning service.

S602: The terminal device sends the local training data to the first network device, and correspondingly, the first network device receives the local training data of the terminal device.

In a possible implementation, the first network device obtains local training data of at least two terminal devices.

In a possible implementation, before obtaining the local training data of the terminal device, the first network device needs to determine whether to join the federated learning service. This can avoid a case in which the first network device obtains the local training data of the terminal device when the first network device does not join the federated learning service, and avoid occupation of a communication resource.

Optionally, before the first network device obtains the local training data of the at least two terminal devices, the method further includes: obtaining local resource information of the first network device; and matching the local resource information of the first network device with the federated learning service information, and determining to enable the first network device to join a federated learning service.

The local resource information of the first network device includes a local data resource list and/or a terminal device type. The first network device determines, based on the local data resource list, a data category and a data amount that have been cached, and estimates, based on the terminal device type, a data category and a data amount that can be collected from the terminal device. The first network device matches the data category and the data amount that have been cached and the data category and the data amount that are estimated to be collected with the required data format and the required data category of the service, and determines to join the federated learning service when a service requirement is met.

Optionally, before the first network device obtains the local training data of the at least two terminal devices, the method further includes: obtaining the training data information sent by the terminal device; and matching the training data information sent by the terminal device with the federated learning service information, and determining to enable the terminal device to join the federated learning service.

The training data information of the terminal device includes at least one of the feature attribute, the data amount, and the data update time point of the training data. The first network device determines, based on the feature attribute, the data amount, and the data update time point of the training data, whether the training data of the terminal device matches the required data format and the required data category, to determine whether the training data meets a federated learning service requirement. Optionally, the first network device further needs to determine whether the terminal device can be trusted. If a condition that the training data meets the service requirement and the terminal device can be trusted is met, the first network device determines to enable the terminal device to join the federated learning service.

In a possible implementation, the first network device is deployed in an access network; the first network device is deployed in a local computing center, and the local computing center communicates with the at least two terminal devices via an access network device; or the first network device is deployed in an edge server, and the edge server communicates with the at least two terminal devices via an access network device.

S603: The first network device processes the local training data of the at least two terminal devices, to obtain training datasets.

Optionally, that the first network device processes the local training data of the at least two terminal devices includes: The first network device maintains the local data resource list based on data information of the local training data; preprocesses the local training data, and caches preprocessed local training data; and caches the local training data, and stores an index of the local training data in the local data resource list.

Optionally, the local data resource list further includes at least one of the following information: a sample category label, a sample form label, and a sample quantity.

Specifically, the first network device performs format integration on the local training data collected from the terminal devices, collects statistics on a quantity of samples of each category in the training data based on a category and content of the received training data, and updates sample statistics information to the local data resource list. The sample statistics information includes the sample category label, the sample form label, and the sample quantity, and a sample index is a search index of a sample in a cache.

The first network device preprocesses the local training data, and caches preprocessed local training data. In addition, the first network device caches the local training data, and stores the index of the local training data in the local data resource list, to obtain the training dataset. In this way, when the federated learning service requires a corresponding training sample, the local training data of the terminal device is collected based on the federated learning service requirement, and the local training data is cached after preprocessing. In addition, the cached training data is read from a buffer based on the index in the local data resource list.

A data cache of the first network device includes a temporary cache specifically belonging to a federated learning service thread and a fixed buffer of the local training data. The temporary cache is used to cache the preprocessed local training data for instant federated training. This part of cache is automatically released after a training thread ends. In the fixed buffer of the local training data, the training data may be invoked by each allowed federated learning service to enter a corresponding temporary buffer, and the invoking is based on the local data resource list of the first network device.

Optionally, the first network device receives federated learning service information sent by the second network device, where the federated learning service information includes at least one of the following: the service identifier, the training objective, the required data format, and the required data category.

S604: The first network device performs model training based on the training datasets, to obtain a model gradient.

Optionally, the first network device obtains a first index from the local data resource list based on the federated learning service information; obtains cached training data corresponding to the first index; and performs model training based on the preprocessed local training data and the cached training data.

Specifically, when the first network device performs model training, the first network device collects the local training data of the terminal device based on the federated learning service requirement and caches the preprocessed data after preprocessing the local training data. In addition, the first network device obtains the first index from the local data resource list based on the federated learning service information, and reads the cached training data from the buffer based on the first index. After the first network device obtains the preprocessed local training data and the cached training data, the two parts of data need to be first processed by using a data preprocessing process that matches the federated learning service, and then enter a temporary buffer corresponding to the federated learning service. In a federated learning training process, the first network device invokes these data to repeatedly iterate and perform federated learning training. After the training ends, the temporary buffer is released.

S605: The first network device sends the model gradient to the second network device, and correspondingly, the second network device receives the model gradient.

Specifically, a model training process is performed in each first network device. One or more first network devices send model gradients to the second network device, and the second network device receives the model gradients of the one or more first network devices. The one or more first network devices may also be referred to as a set of first network devices.

In a possible implementation, the second network device is deployed in a core network.

S606: The second network device integrates model gradients, to obtain an updated training model.

Specifically, the second network device receives the plurality of model gradients of the set of first network devices, and integrates the plurality of model gradients, to obtain the updated training model.

Optionally, the second network device receives federated learning service information sent by a cloud server, where the federated learning service information includes at least one of the following: a service identifier, a training objective, a required data format, and a required data category. The second network device sends the federated learning service information to the first network device.

Specifically, the second network device receives the federated learning service information sent by the cloud server, and sends the federated learning service information to the first network device. In this way, the first network device may match the local resource information of the first network device with the federated learning service information, to determine whether to join the federated learning service.

Optionally, before the second network device receives the model gradient sent by the first network device, the method further includes: receiving data information sent by the first network device; and determining, based on the data information sent by the first network device, to enable the first network device to join the federated learning service.

Specifically, the data information of the first network device includes at least one of a feature attribute, a data amount, and a data update time point of local data. The second network device determines, based on the feature attribute, the data amount, and the data update time point of the local data of the first network device, whether the training data of the first network device matches the required data format and the required data category, to determine whether the training data meets the federated learning service requirement. If the training data meets the service requirement, the second network device determines to enable the first network device to join the federated learning service.

S607: The second network device sends the updated training model to the first network device, and correspondingly, the first network device receives the updated training model.

Optionally, the second network device sends training progress information to the cloud server, where the training progress information includes at least one of the following information: a model error, test accuracy, a quantity of training rounds, and statistical information of a training dataset.

Specifically, the second network device sends the training progress information to the cloud server. In this way, the cloud server may feed back the training progress information to a cloud application, and the cloud application evaluates a model training degree based on the training progress information, to determine whether to stop training.

The second network device sends the updated training model to the first network device, and the first network device performs training based on the updated training model, and then uploads a model gradient to the second network device until the federated learning training is completed.

In a possible implementation, after the federated learning training is completed, the second network device sends a trained federated learning model to the cloud server, where the federated learning model is converged, or a quantity of training rounds of the first network device is not less than a preset threshold of the quantity of training rounds.

Specifically, the second network device sends the trained federated learning model to the cloud server, and the cloud server may support a cloud intelligent service by using the federated learning model.

In a possible implementation, after the federated learning training is completed, the first network device sends the trained federated learning model to the terminal device.

Specifically, the terminal device receives the trained federated learning model sent by the first network device, and the terminal device may support a local intelligent service by using the federated learning model.

In the foregoing method, the first network device obtains the local training data of the at least two terminal devices. A model training process is performed in the first network device, and the first network device and the second network device perform model exchanging and integration, to finally obtain the trained federated learning model. In this way, the training data of the first network device is from the at least two terminal devices. This reduces non-uniformity of data distribution in federated learning. Compared with training performed in the terminal device, training performed in the first network device reduces a quantity of distributed units of the federated learning, further improves non-uniformity of distribution of the training data, and improves convergence of the federated learning training. Therefore, performance of the federated learning is improved.

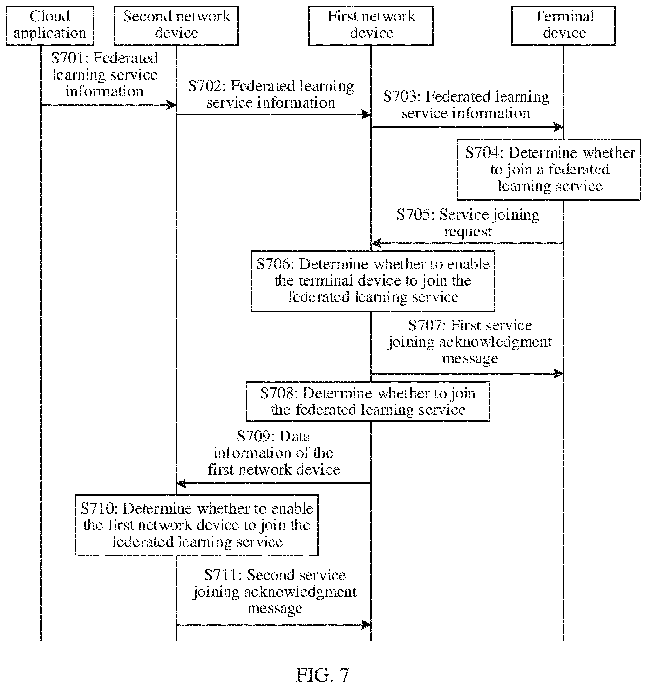

FIG. 7 is a schematic interaction diagram of service deployment in a federated learning method according to an embodiment of this application. Before model training, a cloud application initiates service deployment from top to bottom. As shown in FIG. 7, a service deployment process in the federated learning method includes the following steps.

S701: The cloud application sends federated learning service information to a second network device, and correspondingly, the second network device receives the federated learning service information.

Specifically, the cloud application accesses a federated learning system through a service interface, and sends the federated learning service information to the second network device, where the federated learning service information includes at least one of the following: a service identifier, a training model, a training objective, a required data format, and a required data category.

For example, the service identifier is identification information, for example, a service ID, used to distinguish between different services. The training model includes training layers and inter-layer connections of a neural network. The training objective is that a trained module is used for classification or prediction, to be specific, the trained model is configured to perform classification or prediction on which data. The required data format is a data format that is required, for example, image data or voice data, and a required data amount of the image data or a required data amount of the voice data. The required data category is a specific category of data that is required, for example, plant image data, animal image data, voice data collected by a microphone, image data photographed by a camera, outdoor image data, or indoor image data.

S702: After deploying a federated learning service, the second network device sends the federated learning service information to a first network device, and correspondingly, the first network device receives the federated learning service information.

Specifically, that the second network device deploys the federated learning service means that the second network device establishes a process and independent storage space for the federated learning service, and establishes a communication channel for interaction with the first network device.

S703: The first network device sends the federated learning service information to a terminal device, and correspondingly, the terminal device receives the federated learning service information.

In a possible implementation, the first network device further sends, to the terminal device, return information for joining training. For example, the return information includes information that can be shared with the terminal device after training is completed. For example, the trained model is shared with the terminal device, and the terminal device may support a local intelligent service by using the model. The return information may further include an economic return. The terminal device uploads local training data, and after training is completed, the terminal device may enjoy a corresponding economic return based on the uploaded local training data.

S704: The terminal device determines whether to join the federated learning service.

Specifically, the terminal device determines, based on local resource information, whether to join the federated learning service, where the local resource information of the terminal device includes at least one of local data, a terminal capability, and subscription information. For example, the local data and the terminal capability refer to a data amount and a data coverage range of training data that can be provided by the terminal, for example, categories of data that can be uploaded and a data amount of each category. The subscription information indicates data that can be uploaded by the terminal device, data that cannot be uploaded by the terminal device, and information, for example, a hidden ID, that needs to be hidden in the data that can be uploaded.

S705: The terminal device determines to join the federated learning service, and sends a service joining request to the first network device, and correspondingly, the first network device receives the service joining request.

Specifically, the service joining request includes training data information of the terminal device, where the training data information of the terminal device includes at least one of a feature attribute, a data amount, and a data update time point of the training data.

S706: The first network device determines whether to enable the terminal device to join the federated learning service.

Specifically, the first network device obtains the training data information of the terminal device, matches the training data information of the terminal device with the federated learning service information, and determines whether to enable the terminal device to join the federated learning service.

S707: The first network device determines to enable the terminal device to join the federated learning service, and sends a first service joining acknowledgment message to the terminal device, and correspondingly, the terminal device receives the first service joining acknowledgment message.

S708: The first network device determines whether to join the federated learning service.

Specifically, the first network device reads the federated learning service information, and obtains local resource information, where the local resource information of the first network device includes a local data resource list and/or a terminal device type. The first network device determines, based on the local data resource list, a data category and a data amount that have been cached, and estimates, based on the terminal device type, a data category and a data amount that can be collected from the terminal device. The first network device matches the data category and the data amount that have been cached and the data category and the data amount that are estimated to be collected with the required data format and the required data category of the service, and determines to join the federated learning service when a service requirement is met.

S709: The first network device determines to join the federated learning service, and sends data information of the first network device to the second network device, and correspondingly, the second network device receives the data information of the first network device.

Specifically, the data information of the first network device includes at least one of a feature attribute, a data amount, and a data update time point of local data.

S710: The second network device determines whether to enable the first network device to join the federated learning service.

Specifically, the second network device determines, based on the data information sent by the first network device, whether to enable the first network device to join the federated learning service.

S711: The second network device determines to enable the first network device to join the federated learning service, and sends a second service joining acknowledgment message to the first network device, and correspondingly, the first network device receives the second service joining acknowledgment message.

The first network device and the second network device establish, through interaction and collaboration, a set of first network devices participating in the federated learning service, and therefore, a set of federated learning training units is established for the federated learning service.

It can be learned that, according to the method provided in this embodiment of this application, complexity of direct interaction between a cloud and distributed terminal devices and a communication resource loss are reduced. The first network device is used as a training unit, so that coordinated invoking efficiency of each training unit in federated learning training is improved. In addition, the second network device is deployed in a core network, and can support a big data processing service.

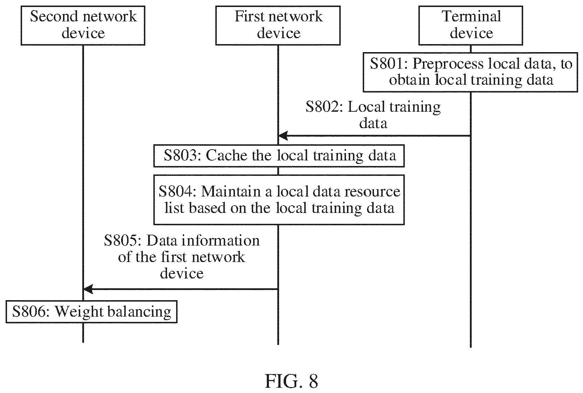

FIG. 8 is a schematic interaction diagram of training data preparation in a federated learning method according to an embodiment of this application. As shown in FIG. 8, a training data preparation process in the federated learning method includes the following steps.

S801: A terminal device preprocesses local data, to obtain local training data.

Specifically, preprocessing performed by the terminal device on the local data includes anonymization processing and/or feature extraction, for example, data ID anonymization and data feature extraction. Then, the local training data is obtained.

S802: The terminal device sends the local training data to a first network device, and correspondingly, the first network device receives the local training data of the terminal device.

S803: The first network device caches the local training data.

S804: The first network device maintains a local data resource list based on the local training data.

The local data resource list includes a sample index. Optionally, the local data resource list further includes at least one of the following information: a sample category label, a sample form label, and a sample quantity.

Specifically, the first network device caches the local training data, and stores an index of the local training data in the local data resource list. The first network device performs format integration on the local training data collected from the terminal devices, collects statistics on a quantity of samples of each category in training data based on a category and content of the received training data, and updates sample statistics information to the local data resource list. The sample statistics information includes the sample category label, the sample form label, and the sample quantity. The sample category label is used to describe a sample of a specific object, the sample form label is used to describe a sample as an image, a voice, or a text, and the sample quantity is used to describe a quantity of samples of each category. The sample index is a search index of a sample in a cache.

For example, the local data resource list is shown in Table 1. In Table 1, the sample index is a storage index of each sample, and is used to invoke data from a memory. A sample encoding format is an encoding format of sample data. When a sample is image data, the sample encoding format includes jpg, png, or eps. A sample format size is a format size of sample data. When a sample is image data, the sample format size includes an image length, an image width, and the like. When a sample is voice data, the sample format size includes a voice length and the like. The sample category label is a category of sample data. When a sample is image data, the sample category label includes an animal image, a plant image, or the like. The sample quantity is a value of a sample data amount. The sample form label is a form of sample data, and includes an image, a voice, a text, or the like.

**Table 1 Local data resource list**

| Sample index | 1 | 2 | ... | k |
|---|---|---|---|---|
| Sample encoding format | Format 1 | Format 2 | ... | Format k |
| Sample format size | Size 1 | Size 2 | ... | Size k |
| Sample category label | Category 1 | Category 2 | ... | Category k |
| Sample quantity | Quantity 1 | Quantity 2 | ... | Quantity k |
| Sample form label | Form 1 | Form 2 | ... | Form k |

An image sample is used as an example, and the local data resource list is shown in Table 2.

**Table 2 Local data resource list**

| Sample index | k |
|---|---|
| Sample encoding format | jpg |
| Sample format size | Image length m and image width n |
| Sample category label | Animal image |
| Sample quantity | Quantity k |
| Sample form label | Image |

S805: The first network device sends data information to a second network device, and correspondingly, the second network device receives the data information of the first network device.

Specifically, the data information of the first network device includes at least one of a feature attribute, a data amount, and a data update time point of local data.

S806: The second network device performs weight balancing.

Specifically, the second network device performs balancing on a training weight of data based on the data information of the first network device, to reduce non-uniformity of distribution of training data cached in each first network device. If the first network device has a large data amount, when the second network device integrates a gradient sent by each first network device, a weight occupied by the gradient sent by the first network device is large.

In a possible implementation, the second network device interacts with each first network device and maintains overall data resource information, for example, a global training sample label list and a quantity of label samples. Update information of a newly added terminal device or an original terminal device in a training process may be updated to the first network device. If an updated data amount is large, the first network device sends updated data information to the second network device, and the second network device maintains the overall data resource information, and properly adjusts the training weight of the data, to reduce the non-uniformity of distribution of the training data cached in each first network device.

It can be learned that, according to the method provided in this embodiment of this application, the training data is aggregated in the first network device, so that a problem of non-uniform data distribution in federated learning can be effectively resolved. After the training data is aggregated in the first network device, distribution synchronization of the data between the first network devices is improved. In addition, an amount of training data cached in the first network device is greater than an amount of data stored in a single terminal device. Therefore, both training precision and a convergence speed are improved. The second network device isolates a cloud application through an interface. Because local training is performed on the training data in the first network device, the cloud application cannot obtain the training data. This improves data security of the federated learning.

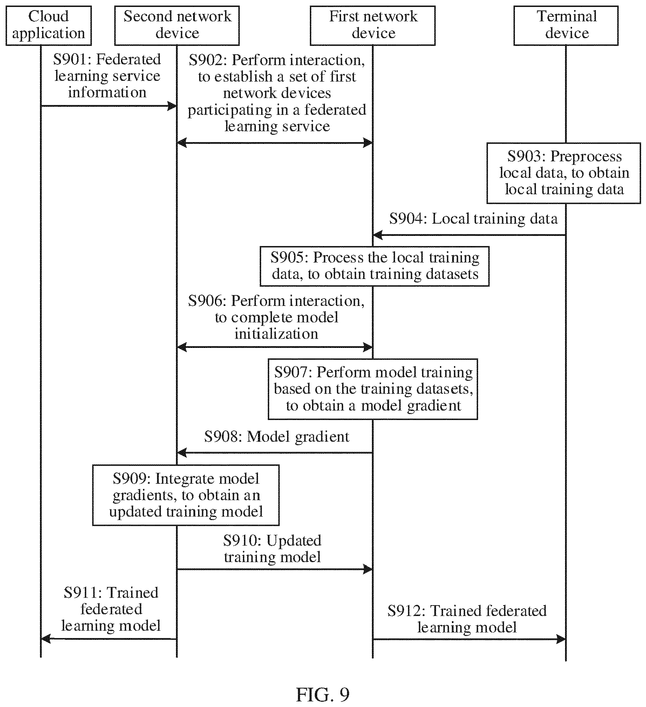

FIG. 9 is a schematic interaction diagram of another federated learning method according to an embodiment of this application. As shown in FIG. 9, the federated learning method includes the following steps.

S901: A cloud application sends federated learning service information to a second network device, and correspondingly, the second network device receives the federated learning service information.

Specifically, the cloud application accesses a federated learning system through a service interface, and sends the federated learning service information to the second network device, where the federated learning service information includes at least one of the following: a service identifier, a training model, a training objective, a required data format, and a required data category.

In a possible implementation, data sent by the cloud application to the second network device through the service interface includes one or more of the following: a training model, training data requirement information, data preprocessing code, a required federated training mode, a loss function, a training optimizer, and an overall function objective description of a federated learning service. After training is completed, an obtained model parameter, a final model error, and final test accuracy may be transferred to the cloud application through an interface. For example, the training model may include training layers and inter-layer connections of a neural network, and a federated learning model may be loaded in a form of code, for example, an encapsulated pytorch model class. The training data requirement information may include the required data format and the required data category. The data preprocessing code may be deployed on each first network device, and is used to preprocess original training data, including feature extraction.

In a possible implementation, the cloud application deploys the federated learning service on the second network device through an interface. The second network device establishes management and model aggregation threads for the federated learning service, and sends the federated learning service information to each first network device. After determining to join the service, each first network device establishes a thread, including a data preprocessing thread, for the service, to obtain local training data of a terminal device. The first network device stores the preprocessed training data in a cache corresponding to the service, to support federated learning training. The first network device further sets a service management thread. Because the first network device may simultaneously perform a plurality of federated learning services, the service management thread is responsible for managing a plurality of federated learning training threads, providing a communication interface (which is used to upload and download a model weight after the federated learning training ends) for each thread, and allocating a computing resource.

In a possible implementation, the second network device is deployed in a core network.

S902: The second network device interacts with the first network device, to establish a set of first network devices participating in the federated learning service.

Specifically, for a method for establishing the set of first network devices participating in the federated learning service, refer to the service deployment process in the federated learning method shown in FIG. 7. Details are not described herein again.

S903: The terminal device preprocesses local data, to obtain the local training data.

Specifically, the terminal device extracts the local data based on the federated learning service information, and preprocessing performed by the terminal device on the local data includes anonymization processing and/or feature extraction, for example, data ID anonymization and data feature extraction.

S904: The terminal device sends the local training data to the first network device, and correspondingly, the first network device receives the local training data of the terminal device.

S905: The first network device processes the local training data, to obtain training datasets.

Optionally, that the first network device processes the local training data includes: The first network device maintains a local data resource list based on data information of the local training data; preprocesses the local training data, and caches preprocessed local training data; and caches the local training data, and stores an index of the local training data in the local data resource list.

Optionally, the local data resource list further includes at least one of the following information: a sample category label, a sample form label, and a sample quantity.

Specifically, the first network device performs format integration on the local training data collected from the terminal devices, collects statistics on a quantity of samples of each category in the training data based on a category and content of the received training data, and updates sample statistics information to the local data resource list. The sample statistics information includes the sample category label, the sample form label, and the sample quantity. The sample category label is used to describe a sample of a specific object, the sample form label is used to describe a sample as a picture, a text, or a signal, and the sample quantity is used to describe a quantity of samples of each category. A sample index is a search index of a sample in a cache.

The first network device preprocesses the local training data, and caches preprocessed local training data. In addition, the first network device caches the local training data, and stores the index of the local training data in the local data resource list. When the federated learning service requires a corresponding training sample, the training sample may be read from a buffer based on the index in the local data resource list. Because the training data is collected based on a federated learning service requirement, the preprocessed local training data also needs to be transferred to a data cache thread during training. The training thread preprocesses the local training data (for example, extracts a feature and adjusts a dimension) based on the training model, and then transfers the preprocessed local training data to the data cache thread for invoking at any time in a federated learning training process.

A data cache of the first network device includes a temporary cache specifically belonging to a federated learning service thread and a fixed buffer of the local training data. The temporary cache is used to cache the preprocessed local training data for instant federated training. This part of cache is automatically released after the training thread ends. In the fixed buffer of the local training data, the training data may be invoked by each allowed federated learning service to enter a corresponding temporary buffer, and the invoking is based on the local data resource list of the first network device.

S906: The first network device interacts with the second network device, to complete model initialization.

Specifically, for a method for completing model initialization, refer to step S805 and step S806 in the training data preparation process in the federated learning method shown in FIG. 8. Details are not described herein again.

S907: The first network device performs model training based on the training datasets, to obtain a model gradient.

Optionally, that the first network device performs model training based on the training datasets includes: The first network device obtains a first index from the local data resource list based on the federated learning service information; obtains cached training data corresponding to the first index; and performs model training based on the preprocessed local training data and the cached training data.

Specifically, after the first network device obtains the preprocessed local training data and the cached training data, the two parts of data need to be first processed by using a data preprocessing process that matches the federated learning service, and then enter a temporary buffer corresponding to the federated learning service. In the federated learning training process, the first network device invokes these data to repeatedly iterate and perform federated learning training. After the training ends, the temporary buffer is released.

In a possible implementation, when performing federated learning training, local training is performed in each first network device by using the federated learning training thread created in a service deployment phase. Each federated learning training thread needs to continuously upload a phased model weight to the second network device in a calculation process, and download an integrated update weight from the second network device. The service management thread established by the first network device in the service deployment phase is responsible for providing the communication interface for each federated learning training thread, and is used to upload and download the model weight. The service management thread provides a model exchanging service for each federated learning training thread at a specific frequency, to be specific, notifies, at intervals, each federated learning training thread to upload and download the model weight in phased training. Each federated learning training thread determines, based on a training setting and a process of the federated learning training thread, whether to join a current round of unified model exchanging. If the federated learning training thread does not join the current round of unified model exchanging, the training continues, and the federated learning training thread waits for subsequent exchanging. If local training has been completed, the federated learning training thread joins the current round of model exchanging, and transfers the model gradient and a corresponding service identifier to the service management thread, and the service management thread uploads the model gradient and the corresponding service identifier to the second network device in a unified manner.

S908: The first network device sends the model gradient to the second network device, and correspondingly, the second network device receives the model gradient.

Specifically, a model training process is performed in each first network device. The first network device sends the model gradient to the second network device, and the second network device receives model gradients of the set of first network devices.

S909: The second network device integrates model gradients, to obtain an updated training model.

Specifically, the second network device receives the plurality of model gradients of the set of first network devices, and integrates the plurality of model gradients, to obtain the updated training model.

In a possible implementation, the second network device transfers, based on the service identifier, the collected model gradients to the model aggregation thread corresponding to the service (where the second network device establishes the model aggregation thread when the federated learning service is deployed, to aggregate models for distributed training). After aggregating the model gradients, the model aggregation thread feeds back an updated model weight to the management thread of the second network device (where the second network device establishes the management thread when the federated learning service is deployed), and then the management thread sends the updated model weight to each first network device in a unified manner. After receiving the updated model weight, the management thread of the first network device transfers the updated model weight to the corresponding federated learning training thread based on the service identifier, and each federated learning training thread continues to perform subsequent training. A periodic model exchanging mechanism is maintained between each first network device and the second network device, and the model exchanging service is provided for each federated learning service at a specific frequency. Each federated learning service corresponds to a corresponding model exchanging frequency based on a service requirement. Model exchanging is controlled by the second network device in a unified manner, and the first network devices synchronously perform each round of model exchanging. The second network device sends signaling to each first network device, to indicate the first network device to perform model exchanging. The second network device receives the model gradient uploaded by the first network device, and feeds back the model gradient to the model aggregation thread corresponding to each federated learning service, to perform model aggregation. After a specific period of time, the second network device ends the current round of communication, and the first network device that does not upload the model gradient in time needs to wait for a next round of model exchanging. Then, the second network device sends the updated model weight to each first network device in a unified manner. A collaborated model exchanging service between the second network device and each first network device is controlled by the second network device. Each first network device may determine, based on an exchanging frequency requirement of the first network device, whether to join the current round of model exchanging, to determine to join the current round of model exchanging, or continue training and wait for subsequent model exchanging.

S910: The second network device sends the updated training model to the first network device, and correspondingly, the first network device receives the updated training model.

The second network device sends the updated training model to the first network device, and the first network device performs training based on the updated training model, and then uploads a model gradient to the second network device until the federated learning training is completed.

Optionally, the second network device sends training progress information to a cloud server, where the training progress information includes at least one of the following information: a model error, test accuracy, a quantity of training rounds, and statistical information of a training dataset.

S911: The second network device sends a trained federated learning model to the cloud application, and correspondingly, the cloud application receives the trained federated learning model.

Specifically, the trained federated learning model is converged, or a quantity of training rounds of the first network device is not less than a preset threshold of the quantity of training rounds.

S912: The first network device sends the trained federated learning model to the terminal device, and correspondingly, the terminal device receives the trained federated learning model.

In the foregoing method, the training data of the first network device is from at least two terminal devices. This reduces non-uniformity of data distribution in federated learning. Compared with training performed in the terminal device, training performed in the first network device reduces a quantity of distributed units of the federated learning, further improves non-uniformity of distribution of the training data, and improves convergence of the federated learning training. Therefore, performance of the federated learning is improved. The first network device interacts with the second network device. This reduces complexity of direct interaction between a cloud and distributed terminal devices and a communication resource loss. The first network device is used as a training unit, so that coordinated invoking efficiency of each training unit in the federated learning training is improved. In addition, the second network device is deployed in a core network, and can support a big data processing service. In addition, the second network device isolates the cloud application through an interface. Because local training is performed on the training data in the first network device, the cloud application cannot obtain the training data. This improves data security of the federated learning.

An embodiment of this application further provides a federated learning method. A first network device obtains training data of at least two terminal devices, and a federated learning training process is performed in the first network device. A cloud application is responsible for managing a federated learning service, and interacts with the first network device by using a cloud as a central facility to complete federated learning. In this way, a degree of freedom of a system is higher, and the cloud application may directly obtain a data resource of the first network device, but data security cannot be ensured.

An embodiment of this application further provides a federated learning method. A first network device is deployed in an access network. Some access network devices are limited by an actual condition, and deployment is inconvenient. Therefore, the first network device may be deployed in a local computing center connected to the access network device, and the first network device communicates with each terminal device and a second network device via the access network device connected to the local computing center. When coverage of some access network devices is small, the first network device is deployed in the local computing center, and a plurality of access network devices share one first network device. In an actual implementation process, a solution in which the plurality of access network devices share one first network device and a solution in which one access network device corresponds to one first network device may be used together. Different solutions are used based on actual deployment conditions, so that a federated learning system in a communication network can be applicable to different distributed working environments. This improves universality of the first network device.

An embodiment of this application further provides a federated learning method. A first network device is deployed in an edge server. In this case, data for federated learning training may be cached in the edge server by a terminal device via an access network device, and each edge server interacts with a second network device to complete the federated learning training.

In addition to being applied to a federated learning service, this embodiment of this application may be further applied to a distributed data processing service in another algorithm.

The foregoing describes the federated learning method provided in embodiments of this application, and the following describes the communication apparatus provided in embodiments of this application.

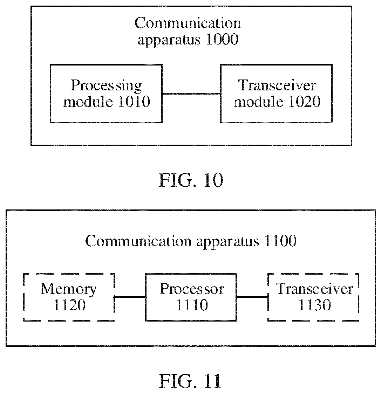

FIG. 10 is a schematic diagram of a communication apparatus according to an embodiment of this application. The communication apparatus 1000 includes a processing module 1010 and a transceiver module 1020.

The communication apparatus 1000 may be a first network device, or may be an apparatus (for example, a chip, a chip system, or a circuit) in the first network device, or may be an apparatus that can be used matching with the first network device, where
the processing module 1010 is configured to obtain local training data of at least two terminal devices; process the local training data of the at least two terminal devices, to obtain training datasets; and perform model training based on the training datasets, to obtain a model gradient; and
the transceiver module 1020 is configured to send the model gradient to a second network device.

In embodiments of this application, the first network device obtains the local training data of the at least two terminal devices. A model training process is performed in the first network device, and the first network device and the second network device perform model exchanging and integration, to finally obtain a trained federated learning model. In this way, training data of the first network device is from the at least two terminal devices. This reduces non-uniformity of data distribution in federated learning. Compared with training performed in the terminal device, training performed in the first network device reduces a quantity of distributed units of the federated learning, further improves non-uniformity of distribution of the training data, and improves convergence of federated learning training. Therefore, performance of the federated learning is improved.

Optionally, in an embodiment, the processing module 1010 is specifically configured to: maintain a local data resource list based on data information of the local training data; preprocess the local training data, and cache preprocessed local training data; and cache the local training data, and store an index of the local training data in the local data resource list.

Optionally, in an embodiment, the local data resource list further includes at least one of the following information: a sample category label, a sample form label, and a sample quantity.

Optionally, in an embodiment, the transceiver module 1020 is further configured to: receive federated learning service information sent by the second network device, where the federated learning service information includes at least one of the following: a service identifier, a training objective, a required data format, and a required data category.

Optionally, in an embodiment, the processing module 1010 is specifically configured to: obtain a first index from the local data resource list based on the federated learning service information; obtain cached training data corresponding to the first index; and perform model training based on the preprocessed local training data and the cached training data.

Optionally, in an embodiment, the processing module 1010 is further configured to: obtain local resource information of the communication apparatus 1000; and match the local resource information of the communication apparatus 1000 with the federated learning service information, and determine to enable the communication apparatus 1000 to join the federated learning service.

Optionally, in an embodiment, the processing module 1010 is further configured to: obtain training data information sent by the terminal device; and match the training data information sent by the terminal device with the federated learning service information, and determine to enable the terminal device to join the federated learning service. The transceiver module 1020 is further configured to: receive an updated training model sent by the second network device.

Optionally, in an embodiment, the transceiver module 1020 is further configured to: send a trained federated learning model to the terminal device, where the federated learning model is converged, or a quantity of training rounds of the first network device is not less than a preset threshold of the quantity of training rounds.

Optionally, in an embodiment, the communication apparatus 1000 is deployed in an access network; or the communication apparatus 1000 is deployed in a local computing center, and the local computing center communicates with the at least two terminal devices via an access network device; or the communication apparatus 1000 is deployed in an edge server, and the edge server communicates with the at least two terminal devices via an access network device.

The communication apparatus 1000 may be a second network device, or may be an apparatus (for example, a chip, a chip system, or a circuit) in the second network device, or may be an apparatus that can be used matching with the second network device, where
the transceiver module 1020 is configured to receive a model gradient sent by a first network device;
the processing module 1010 is configured to integrate model gradients, to obtain an updated training model; and
the transceiver module 1020 is further configured to send the updated training model to the first network device.

In embodiments of this application, the second network device receives the model gradient sent by the first network device, and sends the updated training model to the first network device. A model training process is performed in the first network device, and the first network device and the second network device perform model exchanging and integration, to finally obtain a trained federated learning model. Training data of the first network device is from at least two terminal devices. This reduces non-uniformity of data distribution in federated learning. Compared with training performed in the terminal device, training performed in the first network device reduces a quantity of distributed units of the federated learning, further improves non-uniformity of distribution of the training data, and improves convergence of federated learning training. Therefore, performance of the federated learning is improved.

Optionally, in an embodiment, the transceiver module 1020 is further configured to: receive federated learning service information sent by a cloud server, where the federated learning service information includes at least one of the following: a service identifier, a training objective, a required data format, and a required data category; and send the federated learning service information to the first network device.

Optionally, in an embodiment, the transceiver module 1020 is further configured to: send training progress information to the cloud server, where the training progress information includes at least one of the following information: a model error, test accuracy, a quantity of training rounds, and statistical information of a training dataset.

Optionally, in an embodiment, the transceiver module 1020 is further configured to: send a trained federated learning model to the cloud server, where the federated learning model is converged, or a quantity of training rounds of the first network device is not less than a preset threshold of the quantity of training rounds.

Optionally, in an embodiment, the transceiver module 1020 is further configured to receive data information sent by the first network device; and the processing module 1010 is further configured to determine, based on the data information sent by the first network device, to enable the first network device to join a federated learning service.

Optionally, in an embodiment, the communication apparatus 1000 is deployed in a core network.

The communication apparatus 1000 may be a terminal device, or may be an apparatus (for example, a chip, a chip system, or a circuit) in the terminal device, or may be an apparatus that can be used matching with the terminal device, where
the processing module 1010 is configured to preprocess local data, to obtain local training data; and
the transceiver module 1020 is configured to send the local training data to a first network device.

In embodiments of this application, the terminal device sends the local training data to the first network device, and the first network device obtains local training data of at least two terminal devices. A model training process is performed in the first network device, and the first network device and a second network device perform model exchanging and integration, to finally obtain a trained federated learning model. In this way, training data of the first network device is from the at least two terminal devices. This reduces non-uniformity of data distribution in federated learning. Compared with training performed in the terminal device, training performed in the first network device reduces a quantity of distributed units of the federated learning, further improves non-uniformity of distribution of the training data, and improves convergence of the federated learning training. Therefore, performance of the federated learning is improved.

Optionally, in an embodiment, the transceiver module 1020 is further configured to: receive federated learning service information sent by the first network device, where the federated learning service information includes at least one of the following: a service identifier, a training objective, a required data format, and a required data category.

Optionally, in an embodiment, the processing module 1010 is further configured to: determine, based on local resource information of the communication apparatus 1000, to enable the communication apparatus 1000 to join the federated learning service.

Optionally, in an embodiment, the transceiver module 1020 is further configured to: send a service joining request to the first network device, where the service joining request includes training data information of the communication apparatus 1000.

Optionally, in an embodiment, the transceiver module 1020 is further configured to: receive a trained federated learning model sent by the first network device, where the federated learning model is converged, or a quantity of training rounds of the first network device is not less than a preset threshold of the quantity of training rounds.

It should be understood that, in embodiments of this application, the processing module 1010 may be implemented as a processor or a processor-related circuit component, and the transceiver module 1020 may be implemented as a transceiver or a transceiver-related circuit component.

FIG. 11 is a schematic diagram of another communication apparatus according to an embodiment of this application. The communication apparatus 1100 includes a processor 1110. Optionally, the communication apparatus 1100 further includes a memory 1120 and a transceiver 1130. The communication apparatus 1100 may be a first network device, or may be a chip or an integrated circuit in the first network device. The memory 1120 is configured to store a computer program, and the processor 1110 is configured to execute the computer program stored in the memory 1120. When the computer program stored in the memory 1120 is executed, the processor 1110 is configured to perform an operation performed by the processing module 1010 in the foregoing embodiment, and the transceiver 1130 is configured to perform an operation performed by the transceiver module 1020 in the foregoing embodiment.

It should be understood that, the communication apparatus 1000 or the communication apparatus 1100 in embodiments of this application may correspond to the first network device, the second network device, or the terminal device in the federated learning method in embodiments of this application. In addition, operations and/or functions of modules in the communication apparatus 1000 or the communication apparatus 1100 are separately used to implement corresponding process es of the methods in FIG. 6 to FIG. 9. For brevity, details are not described herein again.

Embodiments of this application further provide a computer-readable storage medium. The computer-readable storage medium is configured to store instructions. When the instructions are executed by a processor, a process related to the first network device in the foregoing method embodiment may be implemented.

Embodiments of this application further provide a computer-readable storage medium. The computer-readable storage medium is configured to store instructions. When the instructions are executed by a processor, a process related to the second network device in the foregoing method embodiment may be implemented.

Embodiments of this application further provide a computer-readable storage medium. The computer-readable storage medium is configured to store instructions. When the instructions are executed by a processor, a process related to the terminal device in the foregoing method embodiment may be implemented.

Embodiments of this application further provide a computer program product including instructions; and when the computer program product runs on a computer or a processor, the computer or the processor is enabled to perform one or more of the steps in the foregoing method embodiments. If each of component modules of the foregoing device is implemented in a form of a software functional unit and is sold or used as an independent product, the component modules may be stored in a computer-readable storage medium.

Embodiments of this application further provide a communication system, including the first network device, the second network device, and the terminal device in the foregoing embodiments.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The communication interface mentioned in embodiments of this application may be a wired communication interface, a wireless communication interface, or a combination thereof. The wired communication interface may be, for example, an Ethernet interface. The Ethernet interface may be an optical interface, an electrical interface, or a combination thereof. The wireless communication interface may be, for example, a wireless local area network (wireless local area network, WLAN) interface.

It should be noted that, when the processor is a general-purpose processor, a digital signal processor (digital signal processor, DSP), an application-specific integrated circuit (application-specific integrated circuit, ASIC), a field programmable gate array (field programmable gate array, FGPA) or another programmable logic device, a discrete gate or transistor logic device, or a discrete hardware component, the memory (storage module) is integrated in the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes need to be determined according to functions and internal logic of the processes, and do not need to be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A federated learning method, wherein the method is applied to a first network device and comprises:
obtaining local training data of at least two terminal devices;
processing the local training data of the at least two terminal devices, to obtain training datasets;
performing model training based on the training datasets, to obtain a model gradient; and
sending the model gradient to a second network device.

2. The method according to claim 1, wherein the processing the local training data of the at least two terminal devices comprises:
maintaining a local data resource list based on data information of the local training data;
preprocessing the local training data, and caching preprocessed local training data; and
caching the local training data, and storing an index of the local training data in the local data resource list.

3. The method according to claim 2, wherein the local data resource list further comprises at least one of the following information: a sample category label, a sample form label, and a sample quantity.

4. The method according to claim 2 or 3, further comprising:
receiving federated learning service information sent by the second network device, wherein the federated learning service information comprises at least one of the following: a service identifier, a training objective, a required data format, and a required data category.

5. The method according to claim 4, wherein the performing model training based on the training datasets comprises:
obtaining a first index from the local data resource list based on the federated learning service information;
obtaining cached training data corresponding to the first index; and
performing model training based on the preprocessed local training data and the cached training data.

6. The method according to claim 4 or 5, wherein before the obtaining local training data of at least two terminal devices, the method further comprises:
obtaining local resource information of the first network device; and
matching the local resource information of the first network device with the federated learning service information, and determining to enable the first network device to join a federated learning service.

7. The method according to any one of claims 4 to 6, wherein before the obtaining local training data of at least two terminal devices, the method further comprises:
obtaining training data information sent by the terminal device; and
matching the training data information sent by the terminal device with the federated learning service information, and determining to enable the terminal device to join the federated learning service.

8. The method according to any one of claims 1 to 7, wherein the first network device is deployed in an access network; the first network device is deployed in a local computing center, and the local computing center communicates with the at least two terminal devices via an access network device; or the first network device is deployed in an edge server, and the edge server communicates with the at least two terminal devices via an access network device.

9. A communication apparatus, comprising a processing module and a transceiver module, wherein
the processing module is configured to: obtain local training data of at least two terminal devices; process the local training data of the at least two terminal devices, to obtain training datasets; and perform model training based on the training datasets, to obtain a model gradient; and
the transceiver module is configured to send the model gradient to a second network device.

10. The apparatus according to claim 9, wherein the processing module is specifically configured to:
maintain a local data resource list based on data information of the local training data;
preprocess the local training data, and cache preprocessed local training data; and
cache the local training data, and store an index of the local training data in the local data resource list.

11. The apparatus according to claim 10, wherein the local data resource list further comprises at least one of the following information: a sample category label, a sample form label, and a sample quantity.

12. The apparatus according to claim 10 or 11, wherein the transceiver module is further configured to:
receive federated learning service information sent by the second network device, wherein the federated learning service information comprises at least one of the following: a service identifier, a training objective, a required data format, and a required data category.

13. The apparatus according to claim 12, wherein the processing module is specifically configured to:
obtain a first index from the local data resource list based on the federated learning service information;
obtain cached training data corresponding to the first index; and
perform model training based on the preprocessed local training data and the cached training data.

14. The apparatus according to claim 12 or 13, wherein the processing module is further configured to:
obtain local resource information of the communication apparatus; and
match the local resource information of the communication apparatus with the federated learning service information, and determine to enable the communication apparatus to join a federated learning service.

15. The apparatus according to any one of claims 12 to 14, wherein the processing module is further configured to:
obtain training data information sent by the terminal device; and
match the training data information sent by the terminal device with the federated learning service information, and determine to enable the terminal device to join the federated learning service.

16. The apparatus according to any one of claims 9 to 15, wherein the communication apparatus is deployed in an access network; the communication apparatus is deployed in a local computing center, and the local computing center communicates with the at least two terminal devices via an access network device; or the communication apparatus is deployed in an edge server, and the edge server communicates with the at least two terminal devices via an access network device.

17. A federated learning method, wherein the method is applied to a second network device and comprises:
receiving a model gradient sent by a first network device;
integrating model gradients, to obtain an updated training model; and
sending the updated training model to the first network device.

18. The method according to claim 17, further comprising:
receiving federated learning service information sent by a cloud server, wherein the federated learning service information comprises at least one of the following: a service identifier, a training objective, a required data format, and a required data category; and
sending the federated learning service information to the first network device.

19. The method according to claim 17 or 18, further comprising:
sending training progress information to the cloud server, wherein the training progress information comprises at least one of the following information: a model error, test accuracy, a quantity of training rounds, and statistical information of a training dataset.

20. The method according to claim 17 or 18, further comprising:
sending a trained federated learning model to the cloud server, wherein the federated learning model is converged, or a quantity of training rounds of the first network device is not less than a preset threshold of the quantity of training rounds.

21. The method according to claim 17 or 18, wherein before the receiving a model gradient sent by a first network device, the method further comprises:
receiving data information sent by the first network device; and
determining, based on the data information sent by the first network device, to enable the first network device to join a federated learning service.

22. The method according to claim 17 or 18, wherein the second network device is deployed in a core network.

23. A federated learning method, wherein the method is applied to a terminal device and comprises:
preprocessing local data, to obtain local training data; and
sending the local training data to a first network device.

24. The method according to claim 23, further comprising:
receiving federated learning service information sent by the first network device, wherein the federated learning service information comprises at least one of the following: a service identifier, a training objective, a required data format, and a required data category.

25. The method according to claim 23 or 24, wherein before the sending the local training data to a first network device, the method further comprises:
determining, based on local resource information of the terminal device, to enable the terminal device to join a federated learning service.

26. The method according to claim 23 or 24, wherein after the determining to enable the terminal device to join the federated learning service, the method further comprises:
sending a service joining request to the first network device, wherein the service joining request comprises training data information of the terminal device.

27. The method according to claim 23 or 24, further comprising:
receiving a trained federated learning model sent by the first network device, wherein the federated learning model is converged, or a quantity of training rounds of the first network device is not less than a preset threshold of the quantity of training rounds.

28. A communication apparatus, wherein the communication apparatus comprises a transceiver module and a processing module, wherein
the transceiver module is configured to receive a model gradient sent by a first network device;
the processing module is configured to integrate model gradients, to obtain an updated training model; and the transceiver module is further configured to send the updated training model to the first network device.

29. The apparatus according to claim 28, wherein the transceiver module is further configured to:
receive federated learning service information sent by a cloud server, wherein the federated learning service information comprises at least one of the following: a service identifier, a training objective, a required data format, and a required data category; and send the federated learning service information to the first network device.

30. The apparatus according to claim 28 or 29, wherein the transceiver module is further configured to:
send training progress information to the cloud server, wherein the training progress information comprises at least one of the following information: a model error, test accuracy, a quantity of training rounds, and statistical information of a training dataset.

31. The apparatus according to claim 28 or 29, wherein the transceiver module is further configured to:
send a trained federated learning model to the cloud server, wherein the federated learning model is converged, or a quantity of training rounds of the first network device is not less than a preset threshold of the quantity of training rounds.

32. The apparatus according to claim 28 or 29, wherein
the transceiver module is further configured to receive data information sent by the first network device; and
the processing module is further configured to determine, based on the data information sent by the first network device, to enable the first network device to join a federated learning service.

33. The apparatus according to claim 28 or 29, wherein the communication apparatus is deployed in a core network.

34. A communication apparatus, wherein the communication apparatus comprises a processing module and a transceiver module, wherein
the processing module is configured to preprocess local data, to obtain local training data; and
the transceiver module is configured to send the local training data to a first network device.

35. The apparatus according to claim 34, wherein the transceiver module is further configured to:
receive federated learning service information sent by the first network device, wherein the federated learning service information comprises at least one of the following: a service identifier, a training objective, a required data format, and a required data category.

36. The apparatus according to claim 34 or 35, wherein the processing module is further configured to:
determine, based on local resource information of the communication apparatus, to enable the communication apparatus to join a federated learning service.

37. The apparatus according to claim 34 or 35, wherein the transceiver module is further configured to:
send a service joining request to the first network device, wherein the service joining request comprises training data information of the communication apparatus.

38. The apparatus according to claim 34 or 35, wherein the transceiver module is further configured to:
receive a trained federated learning model sent by the first network device, wherein the federated learning model is converged, or a quantity of training rounds of the first network device is not less than a preset threshold of the quantity of training rounds.

39. A communication apparatus, comprising a processor coupled to a memory, wherein the memory is configured to store a computer program; and when executing the program, the processor implements the method according to any one of claims 1 to 8 and claims 17 to 27.

40. A computer-readable storage medium, wherein the computer-readable storage medium is configured to store instructions; and when the instructions are executed by a processor, the method according to any one of claims 1 to 8 and claims 17 to 27 is performed.

41. A computer program product comprising instructions, wherein when the computer program product runs on a computer, the method according to any one of claims 1 to 8 and claims 17 to 27 is performed.

42. A communication system, comprising a first network device, a second network device, and a terminal device, wherein
the first network device is the communication apparatus according to any one of claims 9 to 16;
the second network device is the communication apparatus according to any one of claims 28 to 33; and
the terminal device is the communication apparatus according to any one of claims 34 to 38.
